(19) Europäisches Patentamt
European Patent Office
Office européen des brevets

(11) **EP 4 625 613 A1**

(12) **EUROPEAN PATENT APPLICATION**
published in accordance with Art. 153(4) EPC

(43) Date of publication:
01.10.2025 Bulletin 2025/40

(21) Application number: 24843428.4

(22) Date of filing: 11.07.2024

(51) International Patent Classification (IPC):
*H01M 10/54* (2006.01)    *H01M 4/525* (2010.01)
*H01M 4/36* (2006.01)    *C01G 53/00* (2025.01)
*H01M 4/02* (2006.01)

(52) Cooperative Patent Classification (CPC):
Y02W 30/84

(86) International application number:
PCT/KR2024/009959

(87) International publication number:
WO 2025/018710 (23.01.2025 Gazette 2025/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.07.2023 KR 20230094928
03.07.2024 KR 20240087611

(71) Applicant: LG Energy Solution, Ltd.
Seoul 07335 (KR)

(72) Inventors:
• KIM, Hyemin
Daejeon 34122 (KR)
• KWON, Ohsung
Daejeon 34122 (KR)
• CHOI, Jeong Mi
Daejeon 34122 (KR)
• LEE, Jeongbae
Daejeon 34122 (KR)

(74) Representative: Hoffmann Eitle
Patent- und Rechtsanwälte PartmbB
Arabellastraße 30
81925 München (DE)

(54) **METHOD FOR RECYCLING POSITIVE ELECTRODE ACTIVE MATERIAL, RECYCLED POSITIVE ELECTRODE ACTIVE MATERIAL MANUFACTURED THEREBY, AND SECONDARY BATTERY COMPRISING SAME**

(57)    Disclosed are a method of recycling a positive electrode active material, a recycled positive electrode active material prepared using the method and a secondary battery including the recycled positive electrode active material. More particularly, the present invention relates to a method of recycling a positive electrode active material, a recycled positive electrode active material prepared using the method and a secondary battery including the recycled positive electrode active material, wherein the method includes heat-treating a waste positive electrode, where a positive electrode active material layer is formed on a collector, at 300 to 650 °C to thermally decompose a binder and conductive material in the positive electrode active material layer, thereby recovering a positive electrode active material in the positive electrode active material layer; adding a lithium precursor to the recovered positive electrode active material and performing annealing at 400 to 1000 °C under an oxygen atmosphere; and washing the annealed positive electrode active material.

According to the method of recycling a positive electrode active material of the present invention, wastewater can be greatly reduced, lithium remaining on the surface of the positive electrode active material can be reduced, and the positive electrode active material exhibits excellent resistance and lifespan characteristics. In addition, the method is eco-friendly because acid is not used in recovery and regeneration processes, the process cost can be reduced because neutralization and wastewater processing are not required, there are no discarded metal elements because the positive electrode active material is regenerated as it is without decomposition, there is no risk of toxic gas generation or explosion because an organic solvent is not used, and, in particular, economic feasibility and productivity are significantly improved because a washing process is omitted.

【FIG. 3】

**Description**

[Technical Field]

[CROSS-REFERENCE TO RELATED APPLICATION(S)]

This application claims the priority benefit of Korean Patent Application No. 10-2023-0094928, filed on July 20, 2023, and Korean Patent Application No. 10-2024-0087611, filed on July 03, 2024, in the Korean Intellectual Property Office, the disclosure of each of which is incorporated herein by reference.

The present invention relates to a method of recycling a positive electrode active material, a recycled positive electrode active material prepared using the method and a secondary battery including the recycled positive electrode active material, and more particularly a method of reusing a positive electrode active material, the method including adding a lithium precursor, without a washing process, immediately after firing a waste positive electrode at a predetermined temperature and performing annealing under an oxygen atmosphere, followed by removing Li remaining in a positive electrode active material with a small amount of washing solution, so that wastewater is greatly reduced, lithium remaining on the surface of the positive electrode active material is reduced, and the positive electrode active material exhibits excellent resistance and lifespan characteristics. In addition, the method is eco-friendly because acid is not used in recovery and regeneration processes, the process cost can be reduced because neutralization and wastewater processing are not required, there are no discarded metal elements because the positive electrode active material is regenerated as it is without decomposition, there is no risk of toxic gas generation or explosion because an organic solvent is not used, and, in particular, economic feasibility and productivity are significantly improved because a washing process is omitted.

[Background Art]

In general, a lithium secondary battery consists of a positive electrode formed by coating a metal foil, such as aluminum, with a positive electrode active material layer; an anode formed by coating a metal foil, such as copper, with an anode active material layer; a separator for preventing mixing of the positive electrode and anode; and an electrolyte solution that allows lithium ions to move between the positive electrode and anode.

In the positive electrode active material layer, a lithium-based oxide is mainly used as an active material. In the anode active material layer, a carbon material is mainly used as an active material. In general, the lithium-based oxide contains a rare metal such as cobalt, nickel, or manganese. Accordingly, studies on the recovery and recycling of rare metals from the positive electrodes of lithium secondary batteries that are discarded after use or positive electrode scraps (hereinafter referred to as "waste positive electrodes") generated when manufacturing lithium secondary batteries are being actively conducted.

According to the related arts for recovering rare metals from a waste positive electrode, after dissolving a waste positive electrode using hydrochloric acid, sulfuric acid, or nitric acid, rare metals such as cobalt, manganese, and nickel are extracted using an organic solvent, and then the extracted metals are used as raw materials for synthesizing a positive electrode active material.

However, in the case of the method of extracting rare metals using an acid, a neutralization process and a wastewater treatment process are necessary due to environmental pollution problems, which greatly increases process costs. In addition, lithium, which is the main metal of a positive electrode active material, cannot be recovered by the above method.

To solve these drawbacks, methods (direct recycling methods) of directly recycling a positive electrode active material from a waste positive electrode without decomposing the positive electrode active material are being studied. As such methods, there are mainly four methods such as calcination, solvent dissolution, aluminum (A1) foil dissolution, and crushing & screening.

The calcination method can be performed in a simple process, but has disadvantages such as the formation of foreign substances on the surface of a recycled positive electrode active material, which degrades the rate performance of a battery. In addition to the above disadvantages, waste gas is generated, and energy consumption is excessive.

In addition, when using the solvent dissolution method, a recycled positive electrode active material having a relatively clean surface may be obtained. However, since a solvent such as N-methyl-2-pyrrolidone (NMP) used to dissolve a binder is a toxic gas and has an explosion hazard, the method has poor stability and requires an expensive solvent recovery process.

In addition, in the case of the aluminum foil dissolution method, process stability is good, process cost is low, and binder removal is easy. However, foreign substances that are difficult to remove are formed on the surface of a recycled positive electrode active material, and there is a risk of explosion due to hydrogen gas generated in a process of removing aluminum foil.

Finally, the crushing & screening method can be performed through the simplest process among the above methods. However, it is difficult to completely separate a current collector and a positive electrode active material, the particle size distribution of the positive electrode active material is changed during a crushing process, and the battery characteristics of the recycled positive electrode active material are degraded due to a residual binder.

Therefore, there is an urgent need to develop a method of safely recycling a positive electrode active material having improved battery performance in an environmentally friendly manner at a low cost through a simple process without loss of metal elements from a waste positive electrode.

[Disclosure]

[Technical Problem]

Therefore, the present invention has been made in view of the above problems, and it is one object of the present invention to provide a method of reusing a positive electrode active material, the method including adding a lithium precursor, without a washing process, immediately after firing a waste positive electrode at a predetermined temperature and performing annealing under an oxygen atmosphere, followed by removing lithium remaining in a positive electrode active material with a small amount of washing solution, so that wastewater is greatly reduced, lithium remaining on the surface of the positive electrode active material is reduced, and the positive electrode active material exhibits excellent resistance and lifespan characteristics. In addition, the method is eco-friendly because acid is not used in recovery and regeneration processes for the positive electrode active material, the process cost can be reduced because neutralization and wastewater processing are not required, there are no discarded metal elements because the positive electrode active material is regenerated as it is without decomposition, there is no risk of toxic gas generation or explosion because an organic solvent is not used, and, in particular, economic feasibility and productivity are significantly improved because a washing process is omitted.

It is another object of the present invention to provide a secondary battery having excellent initial discharge capacity, rate performance and capacity characteristics.

The above and other objects can be accomplished by the present disclosure described below.

[Technical Solution]

In accordance with an aspect of the present invention, the above and other objects can be accomplished by the provision of a method of recycling a positive electrode active material, the method including: heat-treating a waste positive electrode, where a positive electrode active material layer is formed on a collector, at 300 to 650 °C to thermally decompose a binder and conductive material in the positive electrode active material layer, thereby recovering a positive electrode material in the positive electrode material layer; adding a lithium precursor to the recovered positive electrode active material and performing annealing at 400 to 1000 °C under an oxygen atmosphere; and washing the annealed positive electrode active material.

II) In I), the positive electrode active material layer may preferably include 60 mol% or more of Ni based on 100 mol% in a total of other metals excluding Li.

III) In I) or II), the positive electrode active material recovered after being thermally decomposed may preferably be subjected to the annealing without washing.

IV) In I) to III), the recovered positive electrode active material in the annealing may contain preferably crystalline LiF.

V) In I) to IV), oxygen may be supplied preferably at 1 to 20 L/min in the annealing.

VI) In I) to V), the oxygen may have preferably a purity of 59 % or more.

VII) In I) to VI), the oxygen atmosphere may not preferably include carbon dioxide ($CO_2$).

VIII) In I) to VII), the lithium precursor may preferably include one or more of LiOH, $Li_2CO_3$, $LiNO_3$ and $Li_2O$.

IX) In I) to VIII), the lithium precursor may be added preferably in an amount of 1 mol% to 40 mol% when a total amount of lithium included in the recovered positive electrode active material is 100 mol%.

X) In I) to IX), a weight ratio of the annealed positive electrode active material to a washing solution in the washing may be preferably 1:0.5 to 1:4.

XI) In I) to X), an amount of $Li_2CO_3$ remaining in the washed positive electrode active material may be preferably 0.17 % by weight or less.

XII) In I) to XI), the method of recycling a positive electrode active material may preferably include surface-coating the washed positive electrode active material to obtain a recyclable positive electrode active material.

XIII) In the surface coating of I) to XII), one or more of a metal, an organic metal, and a carbon component may be preferably coated on the surface in a solid-phase or liquid-phase manner, and then heat-treated at 100 to 1200 °C.

In accordance with another aspect of the present invention, there is provided XIV) a recycled positive electrode active material, manufactured by the method of recycling a positive electrode active material according to I) to XIII) .

In accordance with another aspect of the present invention, there is provided XV) a recycled positive electrode active material, wherein the recycled positive electrode active material is one or more selected from the group consisting of lithium nickel oxide (LNO)-based positive electrode active materials, nickel·cobalt·manganese (NCM)-based positive electrode active materials, nickel·cobalt·aluminum(NCA)-based positive electrode active materials and nickel·cobalt·manganese·aluminum (NCMA)-based positive electrode active materials, and contains crystalline LiF, and an amount of $Li_2CO_3$ remaining in recycled positive electrode active material is 0.17 % by weight or less.

XVI) In XV), the recycled positive electrode active material may preferably include 60 mol% or more of Ni based on 100 mol% in a total of other metals excluding Li.

XVII) In XV) or XVI), the recycled positive electrode active material may be preferably surface-coated with a coating agent containing metal or carbon.

In accordance with yet another aspect of the present invention, there is provided XVIII) a secondary battery, including the recycled positive electrode active material of XIV) to XVII).

[Advantageous effects]

In accordance with the present invention, the present invention provides a method of reusing a positive electrode active material, the method including adding a lithium precursor, without a washing process, immediately after firing a waste positive electrode at a predetermined temperature and performing annealing under an oxygen atmosphere, followed by cleanly removing Li remaining in a positive electrode active material with a small amount of washing solution, so that wastewater is greatly reduced, lithium remaining on the surface of the positive electrode active material is reduced, and the positive electrode active material exhibits excellent resistance and lifespan characteristics. In addition, the method is eco-friendly because acid is not used in recovery and regeneration processes for the positive electrode active material, the process cost can be reduced because neutralization and wastewater processing are not required, there are no discarded metal elements because the positive electrode active material is regenerated as it is without decomposition, there is no risk of toxic gas generation or explosion because an organic solvent is not used, and, in particular, economic feasibility and productivity are significantly improved because a process after firing the waste positive electrode is omitted.

[Description of Drawings]

The following drawings attached to this specification illustrate embodiments of the present invention, and are presented to further understand the technical idea of the present invention in combination with the detailed description described below. Accordingly, the present invention is not limited to these drawings.

FIG. 1 is a drawing illustrating a positive electrode scrap discarded after cutting an electrode plate from a positive electrode sheet.
FIG. 2 illustrates SEM images of recycled positive electrode active materials manufactured in Example 1 and Comparative Example 1.
FIG. 3 illustrates changes in capacity retention (%) and resistance increase (%) dependent upon the number of cycles as results of performing charge/discharge cycles on coin half cells (CHC) where recycled positive electrode active materials manufactured in Examples 1 and 2 and Comparative Examples 1 to 3 are applied.
FIG. 4 illustrates a flow chart of a regeneration process of a positive electrode active material according to the present invention.

[Best mode]

The present inventors conducted research into a method of improving the electrochemical performance, resistance characteristics and capacity characteristics of a recycled positive electrode active material with regard to a direct recycled method of a positive electrode active material in waste positive electrodes without decomposing the positive electrode active material, and, during the research, confirmed that, when adding a lithium precursor, without a washing process, immediately after firing a waste positive electrode at a predetermined temperature firing, and performing annealing under an oxygen atmosphere, followed by washing and removing lithium remaining on the surface of the positive electrode active material, lithium remaining on the surface of the positive electrode active material was reduced and was cleanly removed with a small amount of washing solution so that wastewater was greatly reduced and the battery characteristics, etc. of the recycled positive electrode active material were improved. Based on these results, the present inventors conducted further studies to complete the present invention.

Hereinafter, a method of recycling a positive electrode active material according to the present invention, a recycled positive electrode active material prepared using the method, and a secondary battery including the recycled positive electrode active material will be described in detail.

The terms and words which are used in the present specification and the appended claims should not be construed as being confined to common meanings or dictionary meanings but should be construed as having meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

## Method of recycling positive electrode active material

The method of recycling a positive electrode active material of the present invention includes a step of a step of heat-treating a waste positive electrode, where a positive electrode active material layer is formed on a collector, at 300 to 650 °C to thermally decompose a binder and conductive material in the positive electrode active material layer, thereby recovering a positive electrode active material in the positive electrode active material layer; a step of adding a lithium precursor to the recovered positive electrode active material and annealing at 400 to 1000 °C under an oxygen atmosphere; and a step of washing the annealed positive electrode active material. In this case, wastewater is greatly reduced, lithium remaining on the surface of the positive electrode active material is reduced, and the positive electrode active material exhibits excellent resistance and lifespan characteristics. In addition, the method is eco-friendly because acid is not used in recovery and regeneration processes for the positive electrode active material, the process cost can be reduced because neutralization and wastewater processing are not required, there are no discarded metal elements because the positive electrode active material is regenerated as it is without decomposition, there is no risk of toxic gas generation or explosion because an organic solvent is not used, and, in particular, economic feasibility and productivity are significantly improved because a washing process is omitted.

Hereinafter, the method of recycling a positive electrode active material is explained in detail step by step.

### (a) Step of recovering positive electrode active material from waste positive electrode

The step (a) of recovering a positive electrode active material from the waste positive electrode according to the present invention may be preferably a step of heat-treating the waste positive electrode, where the positive electrode active material layer is formed on the collector, at 300 to 650 °C to thermally decompose a binder and conductive material in the positive electrode active material layer, thereby recovering a positive electrode active material in the positive electrode active material layer. In this case, the process may be simplified, and the binder, the conductive material and the collector may be cleanly removed.

The waste positive electrode may be preferably a positive electrode separated from a lithium secondary battery discarded after use, or a defective positive electrode sheet or a positive electrode scrap generated in a process of manufacturing a lithium secondary battery, more preferably a positive electrode scrap remaining after blanking a positive electrode sheet to obtain a positive electrode plate.

The positive electrode active material layer of step (a) may preferably include a positive electrode active material, a binder, and a conductive material.

The positive electrode active material may preferably include one or more selected from the group consisting of a lithium cobalt oxide such as $LiCoO_2$ (hereinafter referred to as "LCO"); a lithium manganese oxide such as $LiMnO_2$ or $LiMn_2O_4$; a lithium iron phosphate compound such as $LiFePO_4$; a lithium nickel cobalt aluminum oxide (NCA); a lithium nickel oxide such as $LiNiO_2$; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. More preferably, the positive electrode active material may be a nickel manganese-based lithium composite metal oxide, an NCM-based lithium composite transition metal oxide, or a mixture thereof. In this case, reversible capacity and thermal stability may be excellent.

As another specific example, the positive electrode active material may be a compound represented by Chemical Formula 1 below:

$$[\text{Chemical Formula 1}] \qquad Li_aNi_xMn_yCo_zM_wO_{2+\delta}$$

In Chemical Formula 1, M includes one or more selected from the group consisting of B, W, Al, Ti, and Mg, $1<a\leq1.1$, $0<x<0.95$, $0<y<0.8$, $0<z<1.0$, $0\leq w\leq0.1$, $-0.02\leq\delta\leq0.02$, and $x+y+z+w=1$.

For example, based on 100 mol% in a total of other metals other than Li, the positive electrode active material may include Ni in an amount of 60 mol% or more, preferably 80 mol% or more. Within this range, initial discharge capacity, rate performance, capacity characteristics and resistance characteristics may be excellent.

In the present disclosure, the Ni content may be measured by ion chromatography (IC) commonly used in the technical field to which the present invention pertains. As a specific example, an inductively coupled plasma (IC-ICP) analyzer, an IC-ICP-MS analyzer, or an IC-ICP-AEC analyzer may be used.

For example, the conductive material may be a carbon-based conductive material, preferably carbon black, carbon nanotubes (CNTs), or a mixture thereof.

For example, the binder may be a polymer binder, preferably polyvinylidene fluoride (PVdF), acrylonitrile-butadiene rubber (NBR), or a mixture thereof, more preferably polyvinylidene fluoride.

The heat treatment may be performed, for example, under an air atmosphere or oxygen atmosphere, preferably under an oxygen atmosphere. In this case, since the binder and the conductive material are thermally decomposed into $CO_2$ and $H_2O$, the positive electrode active material may be separated from the collector, and the separated positive electrode active material may be easily selected into a powder form.

The oxygen may have a purity of, for example, 59 % or more, preferably 70 % or more, more preferably 80 % or more, more preferably 90 % or more, even more preferably 90 to 99 %. Within this range, the binder and the conductive material may be completely removed, the stability of Ni in the active material may be increased.

The purity (%) of the oxygen may be expressed as volume% or mol%.

The purity of oxygen in the present invention may be measured without particular limitations using measurement methods commonly used in the technical field to which the present invention pertains.

The oxygen atmosphere may not contain, for example, carbon dioxide ($CO_2$). In this case, the positive electrode active material may be easily separated from the collector, and the separated positive electrode active material may be easily selected into a powder form.

The oxygen atmosphere may contain, for example, argon in addition to oxygen. In this case, the positive electrode active material may be easily separated from the collector, and the separated positive electrode active material may be easily selected into a powder form.

The oxygen may be supplied at a rate of, for example, 1 to 20 L/min, preferably 3 to 17 L/min, more preferably 5 to 15 L/min, more preferably 7 to 13 L/min. Within this range, the positive electrode active material may be easily separated from the collector, and the separated positive electrode active material may be easily selected into a powder form.

The heat treatment temperature may be preferably 400 to 600 °C, more preferably 500 to 600 °C, still more preferably 530 to 600 °C. Within this range, since a current collector is not melted and only a binder is removed, a positive electrode active material may be easily separated from the current collector.

The heat treatment time may be preferably 10 minutes to 5 hours, more preferably 30 minutes to 5 hours, still more preferably 30 minutes to 2 hours, still more preferably 30 minutes to 1 hour. Within this range, since a current collector is not melted and only a binder is removed, a positive electrode active material may be easily separated from the current collector.

In the present disclosure, the heat treatment time is a time of heat treatment performed at the corresponding heat treatment temperature, and does not include a time required to reach the corresponding heat treatment temperature.

The heat treatment may be performed at a temperature increase rate of, for example, 1 to 20 °C/min, preferably 3 to 10 °C/min, more preferably 3 to 7 °C/min. Within this range, heat treatment may be performed without causing strain on heat treatment equipment, and thermal shock to a positive electrode scrap may be prevented.

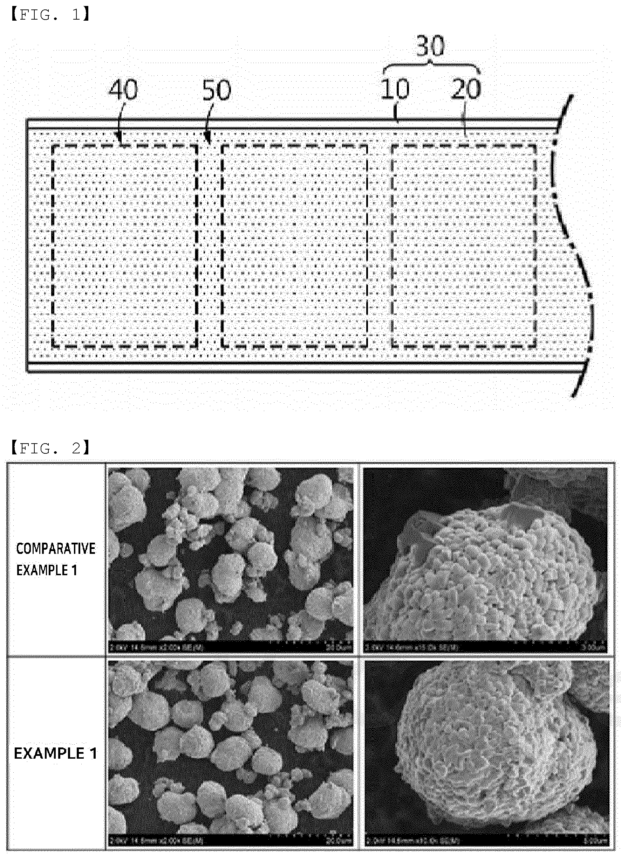

FIG. 1 below shows positive electrode scraps discarded after cutting a positive electrode sheet to obtain positive electrode plates.

Referring to FIG. 1, aluminum foil 10, which is a long sheet-shaped positive electrode current collector, is coated with a positive electrode active material layer 20 including a positive electrode active material, a conductive material, and a binder to obtain a positive electrode sheet 30. Then, a positive electrode plate 40 is obtained by blanking the positive electrode sheet 30 to a certain size. At this time, portions remaining after the blanking are positive electrode scraps 50. The blanking is a means for cutting the positive electrode sheet.

In addition, the positive electrode active material layer 20 is formed by coating the aluminum foil 10 with slurry obtained by mixing a positive electrode active material, a conductive material, a binder, and a solvent. Since the slurry is very sensitive to environmental factors such as temperature, it is very difficult to determine the coating conditions. Accordingly, waste positive electrode sheets are generated until the conditions for manufacturing the positive electrode sheet 30 of desired quality are determined through a predetermined test.

For reference, in the following examples, positive electrode scraps were used as a waste positive electrode.

Preferably, the positive electrode active material which has been thermally decomposed and then recovered may be directly annealed without washing. In this case, since a washing process is omitted, economic feasibility and productivity are significantly improved, and since crystalline LiF is contained, battery performance may be improved.

**(b) Step of adding lithium precursor to recovered positive electrode active material and performing annealing**

The method of recycling a positive electrode active material of the present invention includes (b) a step of adding a lithium precursor to the recovered positive electrode active material and performing annealing under an oxygen atmosphere. By performing annealing under an oxygen atmosphere, lithium remaining on the surface of the positive electrode active material may be reduced, the battery characteristics of the recycled positive electrode active material may be improved due to crystallinity improvement such as crystallinity increase or the recovery of crystal structure, and economic feasibility and productivity may be significantly improved because the recovered positive electrode active material is not subjected to a washing process.

The recovered positive electrode active material may preferably contain crystalline LiF. In this case, since a positive electrode active material having excellent initial discharge capacity, rate performance, capacity characteristics and resistance characteristics may be provided, it is preferred to directly add a lithium precursor to the recovered positive electrode active material, without washing, and perform annealing in terms of the improvement of battery characteristics.

In the annealing step, oxygen may be supplied at, for example, 1 to 20 L/min, preferably 3 to 15 L/min, more preferably 3 to 10 L/min, more preferably 3 to 7 L/min. Within this range, lithium remaining on the surface of the positive electrode active material may be reduced, and crystallinity improvement such as crystallinity increase or the recovery of crystal structure may be accomplished.

The oxygen may have a purity of, for example, 59 % or more, preferably 70 % or more, more preferably 80 % or more, more preferably 90 % or more, even more preferably 90 to 99 %. Within this range, lithium remaining on the surface of the positive electrode active material may be reduced, and excellent crystallinity improvement such as crystallinity increase or the recovery of crystal structure may be accomplished.

The oxygen atmosphere may not contain, for example, carbon dioxide ($CO_2$). In this case, contact with carbon dioxide may be suppressed so that lithium remaining on the surface of the positive electrode active material may be reduced.

The oxygen atmosphere may contain, for example, argon as a component other than oxygen. In this case, the crystallinity improvement, such as crystallinity increase or crystal structure recovery, of the positive electrode active material may be accomplished.

The lithium precursor may preferably include one or more selected from the group consisting of LiOH, $Li_2CO_3$, $LiNO_3$, and $Li_2O$.

The lithium precursor may be preferably added in an amount corresponding to the reduced amount of lithium based on a molar ratio of lithium in the positive electrode active material of step (a) based on the amount of lithium in the recovered positive electrode active material. More preferably, the lithium precursor may be added in an amount corresponding to a molar ratio of lithium of 0.0001 to 0.2 based on the molar ratio of lithium in the positive electrode active material of step (a). Within this range, by supplementing lithium in the recycled positive electrode active material, crystallinity may be increased, or a crystal structure may be recovered, thereby improving crystallinity. Thus, the battery characteristics of the recycled positive electrode active material may be improved.

When the total amount of lithium contained in the recovered positive electrode active material is 100 mol%, the lithium precursor may be added preferably in an amount of 1 to 40 mol%, more preferably in an amount of 1 to 25 mol%, more preferably in an amount of 1 to 17 mol%, even more preferably in an amount of 3 to 17 mol%, specifically preferably 7 to 15 mol%. Within this range, since there is no residual precursor that causes an increase in the resistance of the recycled positive electrode active material, battery characteristics may be improved.

The annealing temperature may be adjusted within a limited range according to the melting point of the lithium precursor. For example, $Li_2CO_3$ may be annealed at a melting point of 723 °C, preferably 700 to 900 °C, more preferably 700 to 800 °C, more preferably 710 to 780 °C, and LiOH may be annealed at a melting point of 462 °C, preferably 400 to 720 °C, more preferably 420 to 700 °C, more preferably 450 to 700 °C, even more preferably 450 to 600 °C, specifically preferably 450 to 480 °C. Within this range, a crystal structure may be recovered, and thus the rate performance of a battery may be excellent.

The annealing temperature may be preferably a temperature exceeding the melting point of the lithium precursor. However, when the annealing temperature exceeds 1000 °C, thermal decomposition of the positive electrode active material may occur, resulting in deterioration of battery performance. Accordingly, the annealing temperature is preferably 1000 °C or lower.

The annealing time may be, for example, 1 hour or more, preferably 1 to 15 hours, more preferably 4 to 13 hours, more preferably 6 to 12 hours. Within this range, a crystal structure may be recovered, and thus the rate performance of a battery may be excellent.

In the annealed positive electrode active material, the amount of residual $Li_2CO_3$ may be, for example, 1.34 % by weight or less, preferably 1.10 % by weight or less, more preferably 0.95 % by weight or less, more preferably 0.1 to 0.95 % by weight. Within this range, the resistance and lifespan characteristics of the positive electrode active material are excellent.

In the annealed positive electrode active material, the amount of residual LiOH may be, for example, 1.0 % by weight or less, preferably 0.1 to 1.0 % by weight. Within this range, the resistance and lifespan characteristics of the positive electrode active material are excellent.

In the annealed positive electrode active material, the total amount of residual $Li_2CO_3$ and residual LiOH may be, for example, 2.22 % by weight or less, preferably 2.0 % by weight or less, more preferably 1.90 % by weight or less, more preferably 0.1 to 1.90 % by weight. Within this range, the resistance and lifespan characteristics of the positive electrode active material are excellent.

In this disclosure, the amounts of LiOH and $Li_2CO_3$ remaining on the surface of the positive electrode active material may be measured using a pH titrator (T5, company Mettler Toledo). Specifically, 5 g of the positive electrode active material is dispersed in 100 ml of distilled water and mixed at 00 rpm for 5 minutes, and then filtering is performed to filter out an active material and obtain a filtrate. Change in pH values is measured while titrating the filtrate with a 0.1 M HCl solution. Based on the measurement result, a pH titration curve is obtained. Using the pH titration curve, the amounts of residual LiOH and $Li_2CO_3$ in the positive electrode active material are calculated.

### (c) Washing annealed positive electrode active material

The method of recycling a positive electrode active material of the present invention includes step (C) of washing the annealed positive electrode active material with a washing solution. In this case, a lithium precursor remaining on the positive electrode active material may be removed using a small amount of washing solution. Accordingly, in the subsequent process, deterioration of battery performance and gas generation due to reaction between a residual lithium precursor and an electrolyte solution may be prevented, and wastewater may be greatly reduced.

The washing may preferably include a step of mixing the annealed positive electrode active material and the washing solution and then performing filtration and a step of drying a solid positive electrode active material obtained after filtration. In this case, excess lithium remaining in the positive electrode active material may be effectively removed.

The drying may be performed at preferably 100 to 500 °C, more preferably 120 to 400 °C, still more preferably 120 to 300 °C, still more preferably 120 to 200 °C. Within this range, residual Li may be efficiently removed.

The drying may preferably be vacuum drying.

In the present disclosure, vacuum drying methods commonly practiced in the technical field to which the present invention pertains may be used in the present invention without particular limitation.

In the washing, a weight ratio of the annealed positive electrode active material to the washing solution may be, for example, 1:0.5 to 1:4, preferably 1:0.5 to 1:3, more preferably 1:0.5 to 1:2, more preferably 1:0.5 to 1:1.5. Within this range, the washing solution may be greatly reduced so that it may be unnecessary to process wastewater, and lithium precursors, such as LiOH and $Li_2CO_3$, which are likely to remain in the positive electrode active material may be effectively removed. Conventionally, a positive electrode active material recovered after heat-treating waste positive electrodes has been washed, and then annealed. In this case, to remove residual lithium in the washing step, a washing solution of at least 30 times the weight of a positive electrode active material is required. However, in the present invention, a recovered positive electrode active material is directly annealed without washing, and then cleaned, so that residual lithium may be easily removed with a small amount of washing solution. Accordingly, wastewater may be greatly reduced and, compared to existing cases, the removal efficiency of residual lithium may be excellent.

The washing solution may be preferably water or an aqueous basic lithium compound solution, preferably water. In this case, lithium precursors such as LiOH, $Li_2CO_3$ remaining on the surface of the positive electrode active material may be completely removed with a small amount of washing solution. Thus, wastewater may be greatly reduced, and the rate performance of a battery may be greatly improved.

The water is preferably distilled water or deionized water. In this case, lithium precursors such as LiOH, $Li_2CO_3$ remaining on the surface of the positive electrode active material may be completely removed with a small amount of washing solution. Thus, wastewater may be greatly reduced, and the rate performance of a battery may be greatly improved.

The aqueous basic lithium compound solution may preferably include a lithium compound in an amount of greater than 0 % by weight and 15 % by weight or less, more preferably an amount of greater than 0 % by weight and 10 % by weight or less. In this case, lithium precursors such as LiOH, $Li_2CO_3$ remaining on the surface of the positive electrode active material may be completely removed with a small amount of washing solution. Thus, wastewater may be greatly reduced, and the rate performance of a battery may be greatly improved.

Mixing of the annealed positive electrode active material and the washing solution is preferably performed by agitation, and the agitation is not particularly limited, but may be, for example, impeller-type agitation, magnetic agitation or ultrasonic agitation.

The agitation may be performed within preferably 30 minutes, more preferably 20 minutes, still more preferably 15 minutes, still more preferably 5 to 10 minutes. Within this range, residual lithium may be effectively removed.

In the washed positive electrode active material, the amount of residual $Li_2CO_3$ may be, for example, 0.17 % by weight or less, preferably 0.15 % by weight or less, more preferably 0.13 % by weight or less, even more preferably 0.05 to 0.13 % by weight. Within this range, the resistance and lifespan characteristics of the positive electrode active material are excellent.

In the washed positive electrode active material, the amount of residual LiOH may be, for example, 0.42 % by weight or less, preferably 0.39 % by weight or less, more preferably 0.05 to 0.39 % by weight. Within this range, the resistance and lifespan characteristics of the positive electrode active material are excellent.

In the washed positive electrode active material, the total amount of residual $Li_2CO_3$ and residual LiOH may be, for example, 0.054 % by weight or less, preferably 0.052 % by weight or less, more preferably 0.05 to 0.052 % by weight. Within this range, the resistance and lifespan characteristics of the positive electrode active material are excellent.

## (d) Obtaining reusable positive electrode active material by coating surface of washed positive electrode active material

The method of recycling a positive electrode active material according to the present invention optionally includes step (d) of obtaining a reusable positive electrode active material by coating the surface of the washed positive electrode active material. In this case, structural stability and electrochemical performance may be improved while maintaining the intrinsic properties of the positive electrode active material.

In the surface coating, preferably, the surface may be coated with a coating agent including one or more of a metal, an organic metal, and a carbon component in a solid-phase or liquid-phase manner, and then may be heat-treated at 100 to 1200 °C, more preferably 200 to 1000 °C, still more preferably 250 to 800 °C. In this case, structural stability and electrochemical performance may be improved while maintaining the intrinsic properties of the positive electrode active material.

The coating agent including a metal may be preferably a coating agent including one or more selected from the group consisting of B, W, Al, Ti, Mg, Ni, Co, Mn, Si, Zr, Ge, Sn, Cr, Fe, V, and Y, more preferably a coating agent including one or more selected from the group consisting of B, W, Al, Ti, and Mg, still more preferably a coating agent including boron (B), tungsten (W), or a mixture thereof, still more preferably a coating agent including tungsten (W) and boron (B), as a specific example thereof, a coating agent including tungsten boride (WB) . In this case, resistance characteristics and lifespan characteristics may be improved.

For example, the coating agent including a metal may be an oxide, acid, or the like including the metal as an element in the molecule thereof.

As the coating agent including an organic metal, coating agents including an organic metal compound containing a metal commonly used in the art to which the present invention pertains may be used without particular limitation. As a specific example, metal alkoxides may be used.

As the coating agent including a carbon component, coating agents including a carbon component commonly used in the art to which the present invention pertains may be used without particular limitation. As a specific example, sugars such as sucrose may be used.

For example, based on components coated on the surface of the positive electrode active material excluding a solvent and based on 1 mol% of the metal in the positive electrode active material before coating, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol%. Within this range, structural stability and electrochemical performance may be improved while maintaining the intrinsic properties of the positive electrode active material.

The heat treatment temperature may preferably 100 to 1,000 °C, more preferably 200 to 1,000 °C, still more preferably 200 to 500 °C. Within this range, performance degradation due to thermal decomposition of the positive electrode active material may be prevented, and structural stability and electrochemical performance may be improved.

The heat treatment time may be preferably 1 to 16 hours, more preferably 3 to 7 hours. Within this range, structural stability and electrochemical performance may be improved while maintaining the intrinsic properties of the positive electrode active material.

Coating methods commonly used in the art to which the present invention pertains may be used as the coating method of the present invention without particular limitation. For example, a liquid method of mixing a positive electrode active material and a liquid coating agent, a mechanochemical method using the high mechanical energy of ball milling, a fluid bed coating method, a spray drying method, a precipitation method of precipitating a coating agent onto the surface of a positive electrode active material in an aqueous solution, a method using reaction between a vapor phase coating agent and a positive electrode active material, or sputtering may be used.

For example, the metal, organic metal, and carbon component may have a spherical shape, a plate shape, a square shape, or a needle shape. For example, such a shape may be controlled by changing process conditions in the preparation process. Each shape is not particularly limited as long as the shape follows a definition commonly accepted in the art to which the present invention pertains.

The coating agent may have preferably an average diameter of 1 to 1000 nm and a specific surface area of 10 to

$100 \ m^2/g$, more preferably an average diameter of 10 to 100 nm and a specific surface area of 20 to 100 $m^2/g$. Within this range, the coating agent may be uniformly adhered to the surface of the positive electrode active material, thereby improving the structural stability of the positive electrode active material. Thus, reduction of the lifespan of the positive electrode active material and degradation of the electrochemical performance thereof due to lattice deformation or collapse of a crystal structure may be prevented.

In the present disclosure, the average diameter may be measured by a measuring method commonly used in the art to which the present invention pertains. For example, the average diameter may be measured by a laser diffraction method. Specifically, positive electrode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter (D50) is calculated based on 50 % of the particle size distribution in the measuring device.

In the present disclosure, the specific surface area may be measured by a measuring method commonly used in the art to which the present invention pertains. For example, the specific surface area may be measured by Brunauer-Emmett-Teller (BET) method. Specifically, the specific surface area may be calculated based on the amount of nitrogen gas adsorbed under liquid nitrogen temperature (77 K) using BELSORP-mino II manufactured by company BEL Japan.

In the positive electrode active material prepared according to the method of recycling a positive electrode active material of the present invention, the amount of residual $Li_2CO_3$ may be, for example, 0.17 % by weight or less, preferably 0.15 % by weight or less, more preferably 0.13 % by weight or less, even more preferably 0.05 to 0.13 % by weight. Within this range, the resistance and lifespan characteristics of the positive electrode active material are excellent.

In the positive electrode active material prepared according to the method of recycling a positive electrode active material, the amount of residual LiOH may be preferably 0.42 % by weight or less, preferably 0.39 % by weight or less, more preferably 0.05 to 0.39 % by weight. Within this range, the resistance and lifespan characteristics of the positive electrode active material are excellent.

In the positive electrode active material prepared according to the method of recycling a positive electrode active material, the total amount of residual $Li_2CO_3$ and residual LiOH may be, for example, 0.054 % by weight or less, preferably 0.052 % by weight or less, more preferably 0.05 to 0.052 % by weight. Within this range, the resistance and lifespan characteristics of the positive electrode active material are excellent.

## Recycled positive electrode active material

The recycled positive electrode active material of the present invention is manufactured according to the method of recycling a positive electrode active material. In this case, wastewater is greatly reduced, lithium remaining on the surface of the positive electrode active material is reduced, and resistance and lifespan characteristics are excellent.

In addition, the recycled positive electrode active material of the present invention is one or more selected from the group consisting of lithium nickel oxide (LNO)-based positive electrode active materials, nickel ·cobalt ·manganese (NCM)-based positive electrode active materials, nickel·cobalt·aluminum(NCA)-based positive electrode active materials and nickel ·cobalt ·manganese ·aluminum (NCMA)-based positive electrode active materials and contains crystalline LiF, and the amount of $Li_2CO_3$ remaining in the recycled positive electrode active material is 0.17 % by weight or less. In this case, lithium remaining on the surface of the positive electrode active material is reduced, and resistance and lifespan characteristics are excellent.

The recycled positive electrode active material contains, for example, 60 mol% or more, preferably 80 mol% or more, more preferably 81 mol% or more of Ni based on 100 mol% in a total of other metals other than Li. Within this range, initial discharge capacity, rate performance, capacity characteristics and resistance characteristics are excellent.

The recycled positive electrode active material may include preferably one or more selected from the group consisting of a lithium cobalt oxide such as $LiCoO_2$ (hereinafter referred to as "LCO") ; a lithium manganese oxide such as $LiMnO_2$ or $LiMn_2O_4$; a lithium iron phosphate compound such as $LiFePO_4$; a lithium nickel cobalt aluminum oxide (NCA); a lithium nickel oxide such as $LiNiO_2$; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. In this case, electrochemical performance, resistance characteristics, capacity characteristics and the like are excellent.

As a specific example, the recycled positive electrode active material may include a compound represented by Chemical Formula 1 below:

[Chemical Formula 1]    $Li_aNi_xMn_yCo_zM_wO_{2+\delta}$

In Chemical Formula 1, M includes one or more selected from the group consisting of B, W, Al, Ti, and Mg, $1<a\leq1.1$, $0<x<0.95$, $0<y<0.8$, $0<z<1.0$, $0\leq w\leq0.1$, $-0.02\leq\delta\leq0.02$, and $x+y+z+w=1$. In this case, electrochemical performance, resistance characteristics, and capacity characteristics may be excellent.

The recycled positive electrode active material may include Ni in an amount of preferably 80 mol% or more, more preferably 81 mol% or more, still more preferably 81 to 95 mol%. Within this range, charging capacity, resistance characteristics, and capacity characteristics may be excellent.

The crystalline LiF may be defined as having a peak, in the XRD spectrum based on 2theta, at 38 to 40°, preferably at 38.5 to 39°. In this case, initial discharge capacity, rate performance, capacity characteristics and resistance characteristics are excellent.

Based on the total weight of the positive electrode active material, the crystalline LiF may be included in an amount of, for example, 0.1 to 1 % by weight, preferably 0.3 to 1 % by weight, more preferably 0.3 % by weight or more and less than 1 % by weight. Within this range, initial discharge capacity, rate performance, capacity characteristics and resistance characteristics are excellent.

In the present disclosure, the crystalline LiF content may be measured by ion chromatography (IC) commonly used in the technical field to which the present invention pertains. As a specific example, an ion chromatography (IC)-inductively coupled plasma (ICP) analyzer, an IC-ICP-MS analyzer, or an IC-ICP-AEC analyzer may be used to measure the crystalline LiF content. Here, the crystalline phase of LiF may be confirmed by an XRD spectrum, and the content of LiF may be measured by a method using IC.

For example, based on an XPS surface analysis spectrum, the crystalline LiF may be included on the surface of the recycled positive electrode active material in an amount of 0.1 to 10 % by weight, preferably 0.1 to 8 % by weight, more preferably 0.1 to 7 % by weight. Within this range, initial discharge capacity, rate performance, capacity characteristics, and resistance characteristics may be excellent.

In the present disclosure, the content of crystalline LiF on the surface of a recycled positive electrode active material may be measured using an X-ray photoelectron spectroscopy (XPS) surface analysis spectrum (K-alpha, Nexsa, Thermo Fisher Scientific). Based on the XPS surface analysis spectrum, the composition ratio of constituent elements or elements may be quantified using the area or height of photoelectrons emitted from the surface of a sample.

In the recycled positive electrode active material, the amount of residual $Li_2CO_3$ may be, for example, 0.17 % by weight or less, preferably 0.15 % by weight or less, more preferably 0.13 % by weight or less, even more preferably 0.05 to 0.13 % by weight. Within this range, the resistance and lifespan characteristics of the positive electrode active material are excellent.

In the recycled positive electrode active material, the amount of residual LiOH may be, for example, 0.42 % by weight or less, preferably 0.39 % by weight or less, more preferably 0.05 to 0.39 % by weight. Within this range, the resistance and lifespan characteristics of the positive electrode active material are excellent.

In the recycled positive electrode active material, the sum of the amount of residual $Li_2CO_3$ and the amount of residual LiOH may be, for example, 0.054 % by weight or less, preferably 0.052 % by weight or less, more preferably 0.05 to 0.052 % by weight. Within this range, the resistance and lifespan characteristics of the positive electrode active material are excellent.

The positive electrode active material may be surface-coated with, for example, a metal or carbon, preferably a metal. In this case, the structural stability of the positive electrode active material may be improved without chemical or physical changes in the positive electrode active material, and electrochemical characteristics such as rate performance, lifespan characteristics, and capacity may be improved. In addition, by substitution with a heterogeneous element on the surface of the positive electrode active material, the amount of residual lithium may be reduced and the pH may be reduced, resulting in improved physicochemical properties.

The metal may preferably include one or more selected from the group consisting of B, W, Al, Ti, Mg, Ni, Co, Mn, Si, Zr, Ge, Sn, Cr, Fe, V, and Y, more preferably one or more selected from the group consisting of B, W, Al, Ti, and Mg, still more preferably boron (B), tungsten (W), or a mixture thereof, still more preferably tungsten (W) and boron (B), as a specific example, tungsten boride (WB). In this case, resistance characteristics and lifespan characteristics may be improved.

For example, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol% based on 1 mol% of metals in the positive electrode active material before coating. Within this range, structural stability and electrochemical performance may be improved while maintaining the intrinsic properties of the positive electrode active material.

The surface coating may be preferably performed by coating the surface with a coating agent including one or more of a metal, an organic metal, and a carbon component in a solid or liquid manner and heat-treating the surface at 100 to 1200 °C, more preferably 200 to 1000 °C, still more preferably 250 to 800 °C. In this case, structural stability and electrochemical performance may be improved while maintaining the intrinsic properties of the positive electrode active material.

The positive electrode active material may be preferably a recycled positive electrode active material. In this case, economic feasibility and productivity are excellent.

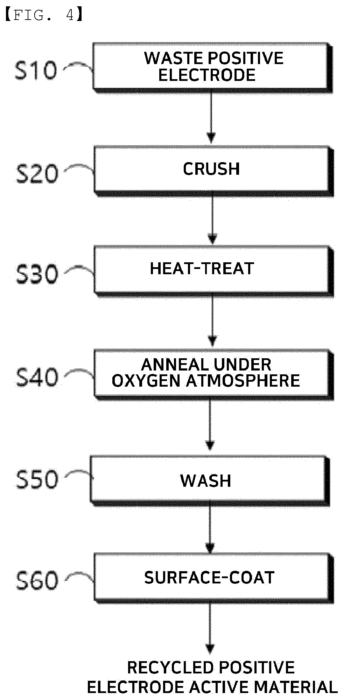

FIG. 4 below is a flowchart for explaining a process for recycling a positive electrode active material according to one embodiment of the present invention.

Referring to FIG. 9, first, positive electrode scraps as waste positive electrodes are prepared (step S10). For example, aluminum foil is coated with slurry prepared by adding N-methyl pyrrolidone (NMP) to an NCM-based lithium composite transition metal oxide, carbon black, and polyvinylidene fluoride and performing mixing, and then drying is performed in a vacuum oven set to about 120 °C to obtain a positive electrode sheet. Then, the positive electrode sheet is punched out to obtain a positive electrode plate of a certain size. In this process, positive electrode scraps are generated.

The positive electrode scrap includes aluminum foil and a positive electrode active material layer formed on the aluminum foil. After volatilizing a solvent, the positive electrode active material layer has a structure in which a positive electrode active material and a conductive material are combined by a binder. Accordingly, the positive electrode active material is separated from the aluminum foil by removing the binder.

Next, the prepared positive electrode scraps are crushed into pieces of appropriate sizes (step S20). Here, the crushing includes cutting or shredding positive electrode scraps into easy-to-handle sizes. As a specific example, the crushed positive electrode scraps may have a size of 1 cm $\times$ 1 cm. For example, the crushing may be performed using a dry crushing device such as a hand mill, a pin mill, a disk mill, a cutting mill, and a hammer mill. To increase productivity, a high-speed cutting machine may be used.

Preferably, whether to perform the crushing or the size of the pieces may be determined by considering the handling of positive electrode scraps and the characteristics of equipment used in the subsequent process. For example, when using equipment capable of continuous processing, positive electrode scraps should be crushed into smaller pieces because the pieces should have good fluidity.

Next, the positive electrode scrap is heat-treated to recover the positive electrode active material (step S30). Here, the heat treatment is performed to thermally decompose the binder in the active material layer.

Through the heat treatment, the binder and conductive material in the active material layer are thermally decomposed into $CO_2$ and $H_2O$ and removed. Since the binder is removed, the positive electrode active material is separated from a collector, and the separated positive electrode active material is easily sorted into a powder form. Accordingly, through only step S30, the active material layer may be separated from the collector, and further, the positive electrode active material in the active material layer may be recovered into a powder form.

It is important to perform the heat treatment under an air atmosphere or oxygen atmosphere, preferably under an oxygen atmosphere. When the heat treatment is performed in a reducing gas or inert gas atmosphere, the binder and the conductive material are carbonized rather than thermally decomposed. When the binder and the conductive material are carbonized, carbon components remain on the surface of the positive electrode active material, resulting in deterioration in the performance of a recycled positive electrode active material. In contrast, when the heat treatment is performed under an air atmosphere or oxygen atmosphere, specifically under an oxygen atmosphere, both the binder and the conductive material are removed because carbon components in the binder and conductive material react with oxygen, are converted into gases such as CO and $CO_2$, and disappears. More specifically, the heat treatment may be performed under conditions where oxygen and argon with 95% purity are at concentrations of 5% and carbon dioxide is removed.

The heat treatment is performed preferably at 300 to 650 °C, specifically at 590 °C. It is difficult to remove the binder below 300 °C, so the collector may not be separated. The collector melts above 650 °C, so the collector may not be separated.

The heat treatment is performed at preferably a temperature increase rate of 1 to 20 °C/min, more preferably a temperature increase rate of 3 to 17 °C/min, specifically 5 °C/min. Within this range, heat treatment may be performed without causing strain on heat treatment equipment, and thermal shock to positive electrode scraps may be prevented.

The heat treatment may be performed until the binder is completely thermally decomposed, preferably for 30 minutes or more, more preferably for 30 minutes to 5 hours, specifically for about 30 minutes. Within this range, the binder may be completely thermally decomposed, and thermal decomposition efficiency may be excellent.

For example, the heat treatment may be performed using various types of furnaces. For example, a box-type furnace may be used. Considering productivity, a rotary kiln capable of continuous processing may be used.

After the heat treatment, slow cooling or rapid cooling may be performed in the air.

Next, a lithium precursor is added to the recovered positive electrode active material and annealing is performed under an oxygen atmosphere (step S40).

In the annealing step of step S40, it is important to immediately add a lithium precursor to the recovered positive electrode active material and perform annealing without a washing process. In this case, since crystalline LiF generated on the surface of the positive electrode active material in the previous heat treatment step S30 is contained in the recycled positive electrode active material, when the recycled positive electrode active material is applied to a secondary battery, battery characteristics may be improved.

In addition, the annealing is performed preferably under an oxygen atmosphere, specifically in the presence of an oxygen with a purity of 59 % or more, preferably 70 % or more, more preferably 80 % or more, more preferably 90 % or more, even more preferably 90 to 99 %, specifically under conditions where carbon dioxide is removed and 95 % oxygen and 5 % argon are present. In this case, lithium remaining on the surface of the positive electrode active material may be reduced, and battery characteristics may be improved.

In the step S40, oxygen may be supplied, for example, at a rate of 1 to 20 L/min, specifically at a rate of 3 to 8 L/min. Within this range, lithium remaining on the surface of the positive electrode active material may be reduced, and crystallinity improvement such as crystallinity increase or crystal structure recovery may be accomplished.

In addition, loss of lithium in the positive electrode active material occurs during preceding step S30. In step S40, the loss amount of lithium is supplemented. In addition, during the preceding step, a deformed structure (e.g., $Co_3O_4$ in the case of an LCO active material) may be formed on the surface of the positive electrode active material. In step S40, the crystal structure of the positive electrode active material may be recovered through annealing in the presence of oxygen, thereby improving the battery characteristics of a recycled positive electrode active material, or restoring the battery characteristics of the recycled positive electrode active material to the level of battery characteristics of a fresh positive electrode active material. Here, "fresh" is a concept opposite to "recycling", a fresh material means that the material was made for the first time, and the fresh material is the same word as "raw material" used in the examples.

As a specific example of the lithium precursor, LiOH is used.

Based on the molar ratio of lithium to other metals in a fresh positive electrode active material contained in the positive electrode active material layer, the lithium precursor is preferably added in a minimum amount corresponding to the lost lithium molar ratio. When an excess of lithium precursor is added relative to the amount of lithium lost, the unreacted lithium precursor may remain in a recycled positive electrode active material, which increases resistance. Accordingly, an appropriate amount of the lithium precursor needs to be added.

As an embodiment, based on the case where a molar ratio of lithium in a fresh positive electrode active material is 1 compared to other metals (M), the lithium precursor may be added in an amount where a molar ratio of lithium is 0.001 to 0.4, preferably a molar ratio of lithium is 0.01 to 0.4, more preferably a molar ratio of lithium is 0.09 to 0.2. As a specific example, when the lithium precursor is added in a loss ratio relative to the content of lithium in the fresh positive electrode active material, based on ICP analysis results, the capacity may be increased to a level equivalent to that of the fresh positive electrode active material. Here, the ICP analysis results have an error value of about $\pm 0.02$

As an embodiment, the lithium precursor may be added in an amount of 1 to 40 mol%, more preferably in an amount of 1 to 25 mol%, more preferably in an amount of 1 to 17 mol%, even more preferably in an amount of 3 to 17 mol%, specifically preferably in an amount of 7 to 15 mol% when the total amount of lithium included in the recovered positive electrode active material is 100 mol%. Within this range, since there is no residual precursor that causes an increase in the resistance of the recycled positive electrode active material, battery characteristics may be improved.

The annealing may be performed, for example, at 400 to 1000 °C under an oxygen ($O_2$) atmosphere, preferably at 600 to 900 °C. In this case, the temperature should be determined within a limited range according to the types of the lithium precursor.

The annealing temperature is preferably a temperature exceeding the melting point of the lithium precursor. However, since performance degradation occurs due to thermal decomposition of the positive electrode active material at a temperature exceeding 1000 °C, the annealing temperature should not exceed 1000 °C. When $Li_2CO_3$ is used as the lithium precursor, the annealing temperature may be preferably 700 to 900 °C, more preferably 700 to 800 °C, even more preferably 710 to 780 °C, most preferably 750 to 780 °C. In addition, when LiOH is used as a lithium precursor, the annealing temperature is appropriately 400 to 720 °C, more appropriately 420 to 700 °C, most appropriately 450 to 700 °C.

For example, the annealing time may be preferably 1 hour or more, preferably 1 hour to 15 hours or less, more preferably 4 to 13 hours, more preferably 6 to 12 hours, specifically 10 hours. When the annealing time is long, a crystal structure may be sufficiently recovered, but even long-term annealing does not significantly affect performance. In this case, the same or similar equipment as in step S30 of performing heat treatment may be used as the annealing equipment.

Next, the annealed positive electrode active material is washed (step S50).

Since the lithium precursor that failed to participate in the reaction in the annealing step S40 exists in the form of LiOH and $Li_2CO_3$ on the surface of the positive electrode active material, a residual lithium removal process is required to remove LiOH and $Li_2CO_3$. Impurities in the form of LiOH and $Li_2CO_3$ may react with an electrolyte solution, deteriorating battery performance and generating gas, so these impurities should be thoroughly removed.

In the washing, the annealed positive electrode active material and the washing solution may be used in a weight ratio of 1:0.5 to 1:4, specifically in a weight ratio of 1:1. In this case, residual lithium may be removed with a small amount of washing solution, so that wastewater may be greatly reduced, and the positive electrode active material may have excellent resistance and lifespan characteristics.

In the washing, distilled water or an aqueous alkaline lithium compound solution containing greater than 0 % by weight and 10 % by weight or less of an alkaline lithium compound may be preferred, and distilled water may be more preferred. In this case, safety may be ensured, costs may be reduced, and transition metals contained in the positive electrode active material may be prevented from eluting.

The washing may be preferably performed by mixing the annealed positive electrode active material and the washing solution and drying the obtained solid positive electrode active material.

Mixing of the annealed positive electrode active material and the washing solution may preferably be performed by agitation. The agitation is not particularly limited, but may be mechanical agitation or ultrasonic agitation.

The mechanical agitation may preferably be performed at 100 to 1000 RPM for 5 to 30 minutes, more preferably 250 to 350 RPM for 5 to 10 minutes.

The filtration is preferably vacuum filtration using a filter, and the drying is vacuum drying at 50 to 140 °C.

Next, as an optional step, the surface of the washed positive electrode active material may be coated (step S60).

For example, in the surface coating, the surface is coated with a coating agent containing metals, organic metals, or carbon in a solid or liquid phase and heat-treated. When the heat treatment temperature is too low, formation of a desired surface protection layer by the dissimilar metals may not occur. When the heat treatment temperature is too high, due to thermal decomposition of the positive electrode active material, battery performance may deteriorate.

Specifically, when the washed positive electrode active material is coated with a metal oxide such as B, W, and B-W or an acid and heat-treated, a surface protection layer such as a lithium boron oxide layer is formed on the surface of the positive electrode active material.

The surface coating may be performed using a solid-phase or liquid-phase method, as a specific example, mixing, milling, spray drying, or grinding.

When the molar ratio of lithium to other metals in the positive electrode active material in annealing step S40 is 1:1, lithium in the positive electrode active material reacts with the coating agent in surface coating step S60, and the molar ratio of lithium to other metal in the positive electrode active material is less than 1:1. In this case, the capacity of a battery containing the recycled positive electrode active material may not be fully (up to 100 %) expressed. However, in annealing step S40, when an excess of the lithium precursor is added so that lithium is contained in a greater molar ratio of 0.0001 to 0.1 compared to other metals in the positive electrode active material, a surface protection layer is formed in surface coating step S60, and the molar ratio of lithium to other metals in the positive electrode active material becomes 1:1, thereby preventing battery capacity degradation.

**Secondary battery**

A secondary battery of the present invention includes the recycled positive electrode active material. In this case, lithium remaining in the positive electrode active material is greatly reduced, so that resistance and lifespan characteristics are excellent. In addition, since the residual lithium is removed with a small amount of washing solution, wastewater is greatly reduced. Further, since an acid and an organic solvent are not used in the recovery and regeneration processes for the positive electrode active material, the secondary battery is eco-friendly. In particular, since an initial washing process is omitted, economic feasibility and productivity are excellent.

Description of the secondary battery of the present invention may include all of the description of the positive electrode active material and the method of recycling the positive electrode active material described above, and thus repeated description is omitted in this specification.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

Example 1

After blanking a positive electrode plate, discarded positive electrode scraps (collector: aluminum foil, positive electrode active material: NCM-based lithium composite transition metal oxide (nickel content: 88 mol%)) were crushed, heat treatment was performed at 590 °C under an oxygen atmosphere for 30 minutes to remove a binder and a conductive material, and the collector and positive electrode active material were separated. Next, a positive electrode active material was recovered. Here, the temperature increase rate until reaching the heat treatment temperature was 5 °C/min, and oxygen atmosphere (hereinafter referred to as 'reactive gas') contained 95% oxygen and 5% argon, but excluded carbon dioxide. The reactive gas was supplied at 10 L/min.

The recovered positive electrode active material was directly added to a lithium precursor, LiOH, without washing, and annealed at 700 °C for 10 hours under the reactive gas. In addition, the reactive gas was supplied at 3 L/min. Here, when the total amount of lithium contained in the recovered positive electrode active material was 100 mol%, the lithium precursor was added in an amount of 15 mol%.

The annealed positive electrode active material and distilled water were mixed in a weight ratio of 1:1 and agitated at 500 rpm for 5 minutes, followed by vacuum filtration to obtain solids. The solids were subjected to vacuum drying at 100 to 130 °C for 12 hours to obtain a washed positive electrode active material.

The washed positive electrode active material and boric acid ($H_3BO_3$) were mixed in a solid state and heated at 300 °C for 5 hours, thereby obtaining a recycled final positive electrode active material coated with boron. Here, boric acid was added in an amount corresponding to 700 ppm of boron lost in the previous process, the heating was performed at a temperature-increasing rate of 2 °C/min until the heat treatment temperature was reached, and air was supplied at a rate of 3 L/min.

In the present disclosure, the molar ratio between lithium and other metals in the positive electrode active material, etc. were measured using an IC analyzer. In this case, general ICP analyzers, which are widely used in laboratories, may be used, but there is no deviation depending on the measurement devices or method.

In this specification, ppm is based on weight unless otherwise specified.

Example 2

A recycled positive electrode active material was manufactured in the same manner as in Example 1, except that the reactive gas was applied at 8 L/min in the annealing step of Example 1.

Comparative Example 1

A recycled positive electrode active material was manufactured in the same manner as in Example 1, except that the annealing of Example 1 was performed under an air atmosphere.

Comparative Example 2

A recycled positive electrode active material was manufactured in the same manner as in Example 1, except that the annealing of Example 1 was performed under an air atmosphere and air was supplied at 8 L/min.

Comparative Example 3

A recycled positive electrode active material was manufactured in the same manner as in Example 1, except that a positive electrode active material recovered after heat-treating positive electrode scraps according to Example 1 was washed with an aqueous alkaline lithium compound solution, and then a lithium precursor, LiOH, was added thereto to perform annealing. Here, the aqueous alkaline lithium compound solution contained 15 % by weight of LiOH, and a weight ratio of the recovered positive electrode active material to the aqueous alkaline lithium compound solution for washing was 1:1.

[Test Example I: Content of lithium remaining after annealing]

The content of lithium remaining in the positive electrode active material obtained after annealing according to each of Examples 1 and 2 and Comparative Examples 1 and 2 was measured, and the results are shown in Table 1 below.

* Residual lithium content: The residual lithium content was measured using a pH titrator (MATi 06, company Metrohm). Specifically, 5 g of the positive electrode active material was dispersed in 100 ml of distilled water and mixed at 500 rpm for 5 minutes, and then filtering was performed to filter out an active material and obtain a filtrate. Change in pH values was measured while titrating the filtrate with a 0.1 M HCl solution. Based on the measurement result, a pH titration curve was obtained. Using the pH titration curve, the amounts of residual LiOH and $Li_2CO_3$ in the positive electrode active material were calculated.

[Table 1]

| Classification | LiOH (% by weight) | $Li_2CO_3$ (% by weight) | Total amount (% by weight) |
|---|---|---|---|
| Example 1 | 0.989 | 0.861 | 1.851 |
| Example 2 | 0.956 | 0.925 | 1.882 |
| Comparative Example 1 | 0.820 | 1.758 | 2.579 |
| Comparative Example 2 | 0.814 | 1.963 | 2.777 |

As shown in Table 1, it was confirmed that, in the case of Examples 1 and 2 according to the present invention, the amount of residual $Li_2CO_3$, the amount of residual LiOH and the total amount thereof were reduced, and the amount of residual LiOH was greatly reduced, compared to Comparative Examples 1 and 2.

[Test Example II: Content of lithium remaining in recycled positive electrode active material]

The content of lithium remaining in the recycled positive electrode active material obtained after being washed according to each of Examples 1 and 2 and Comparative Examples 1 and 2 was measured. Results are shown in Table 2 below.
[Table 2]

| Classification | LiOH (% by weight) | $Li_2CO_3$ (% by weight) | Total amount (% by weight) |
|---|---|---|---|
| Example 1 | 0.411 | 0.119 | 0.530 |
| Example 2 | 0.379 | 0.136 | 0.515 |
| Comparative Example 1 | 0.372 | 0.221 | 0.593 |
| Comparative Example 2 | 0.302 | 0.248 | 0.550 |

As shown in Table 2, it could be predicted that, in the case of Examples 1 and 2 according to the present invention, the amount of residual $Li_2CO_3$, the amount of residual LiOH and the total amount thereof were reduced, and, in particular, the amount of residual $Li_2CO_3$ was greatly reduced, thereby further improving battery characteristics, compared to Comparative Examples 1 and 2.

[Test Example III: SEM analysis]

The recycled positive electrode active materials obtained according to Example 1 and Comparative Example 1 were photographed with an SEM device and are shown in FIG. 2 below. The SEM images were taken with a general SEM device commonly used in laboratories. Specifically, S-4200 from HITACHI was used for the photograph. However, there is no deviation depending upon the measuring device or method.
As shown in FIG. 2 below, it was confirmed that, in the case of the recycled positive electrode active material prepared in Example 1, there were no impurities on the surface and the particle shape was relatively spherical, compared to the recycled positive electrode active material prepared in Comparative Example 1, and, in the case of the recycled positive electrode active material prepared in Comparative Example 1, impurities remained on the surface and the particles were broken and clumped together.

[Test Example IV: CHC cell evaluation]

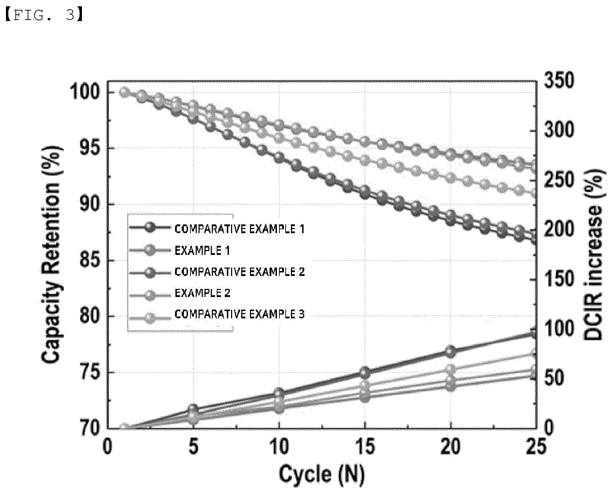

The capacity retention and resistance increase of a coin half cell (CHC) made of the recycled positive electrode active material obtained in each of Examples 1 and 2 and Comparative Examples 1 to 3 were measured by the following CHC evaluation. Results are shown in FIG. 3 and Table 3 below.

* Manufacture of CHC cell: 96.5 % by weight of a recycled positive electrode active material, 1.5 % by weight of carbon black as a conductive material and 2 % by weight of PVdF as a binder were weighted and mixed with NMP to prepare a positive electrode active material slurry. The prepared positive electrode active material slurry was applied to an aluminum foil with a thickness of 20 μm and dried at 130 °C for 1 hour, and rolled, thereby manufacturing a positive electrode. As a negative electrode, lithium metal was used.

After binding the manufactured positive and negative electrodes to the separator, an electrolyte containing ethylene carbonate (EC) and ethyl methyl carbonate (EMC) in a weight ratio of 3:7 and other additives was injected thereto, thereby manufacturing CHC. The manufactured CHC was aged at 25 °C for 10 hours, and then charged to 4.25 V with a 0.1 C constant current and a 0.05 C cut off in CC-CV mode, and then discharged to 2.5 V with a 0.1 C constant current to be activated. Next, cycle evaluation was performed.

* Measurement of capacity retention at high temperature (45 °C): Formation of each CHC made of the recycled positive electrode active materials obtained in Examples 1 and 2 and Comparative Examples 1 to 3 was performed at 0.1 C rate, followed by charging to 4.25 V with a constant current of 0.33C at 45 °C under a condition of a 0.05C cut off. Next, it was discharged to 2.5 V with a 0.33 C constant current. The charging and discharging behaviors were considered as one cycle, and this cycle was repeated 25 times. The discharge capacity after 1 cycle and the discharge capacity after 25 cycles were measured using a PNE-05-0.1 charger and discharger (manufacturer: PNE Solution Co., Ltd., 5 V, 0.1 A). The discharge capacity after 1 cycle was set as an initial capacity. Then, the 25th discharge capacity was compared with the initial capacity (100%), the capacity retention rate was calculated by Equation 1 below, and the results are shown in FIG. 3 and Table 3 below.

Capacity retention rate (%) = (Discharge capacity after cycling at high temperature/initial discharge capacity) $\times$ 100     [Equation]

[298] * Measurement of resistance increase at high temperature (45 °C): Formation of each CHC made of the recycled positive electrode active materials obtained in Examples 1 and 2 and Comparative Examples 1 to 3 was performed at 0.1 C rate, followed by charging to 4.25 V with a constant current of 0.33C at 45 °C under a condition of a 0.05C cut off. Next, it was discharged to 2.5 V with a 0.33 C constant current. The charging and discharging behaviors were considered as one cycle. While repeating this cycle 25 times, a resistance increase was measured. The resistance increase was calculated according to Equation 2 below, and results are shown in FIG. 3 and Table 3 below.

$$[Equation2]$$

$$\text{Resistance increase (\%)} = \{(DCIR2-DCIR1)/DCIR1\} * 100$$

In Equation 2, DCIR1 denotes a measured resistance (Ohm) at 1 cycle, and DCIR2 denotes a measured resistance(Ohm) at the 25th cycle.

[Table 3]

| Classification | Capacity retention (%; 25 cycles) | Resistance increase (%; 25 cycles) |
|---|---|---|
| Example 1 | 93.7 | 53.3 |
| Example 2 | 93.2 | 59.4 |
| Comparative Example 1 | 87.6 | 95.2 |
| Comparative Example 2 | 86.9 | 97.6 |
| Comparative Example 3 | 91.0 | 75.8 |

As shown in Table 3, it was confirmed that the recycled positive electrode active materials (Examples 1 and 2) according to the present invention exhibited a high capacity retention and a significantly low resistance increase of 53 to 60%, compared to Comparative Examples 1 to 3, thereby exhibiting greatly improved battery characteristics.

In addition, as shown in FIG. 3 below, it was confirmed that the recycled positive electrode active materials (Examples 1 and 2) according to the present invention exhibited a high capacity retention and a significantly low resistance increase even when the number of cycles increased, compared to Comparative Examples 1 to 3, thereby exhibiting improved battery characteristics.

## Claims

1. A method of recycling a positive electrode active material, the method comprising:

    heat-treating a waste positive electrode, where a positive electrode active material layer is formed on a collector, at 300 to 650 °C to thermally decompose a binder and conductive material in the positive electrode active material layer, thereby recovering a positive electrode active material in the positive electrode active material layer;
    adding a lithium precursor to the recovered positive electrode active material and performing annealing at 400 to 1000 °C under an oxygen atmosphere; and
    washing the annealed positive electrode active material.

2. The method according to claim 1, wherein the positive electrode active material layer comprises 60 mol% or more of Ni based on 100 mol% in a total of other metals excluding Li.

3. The method according to claim 1, wherein the positive electrode active material recovered after being thermally decomposed is subjected to the annealing without washing.

4. The method according to claim 1, wherein, in the annealing, the recovered positive electrode active material contains crystalline LiF.

5. The method according to claim 1, wherein, in the annealing, oxygen is supplied at 1 to 20 L/min.

6. The method according to claim 1, wherein the oxygen has a purity of 59 % or more.

7. The method according to claim 1, wherein the oxygen atmosphere does not comprise carbon dioxide ($CO_2$).

8. The method according to claim 1, wherein the lithium precursor comprises one or more of $LiOH$, $Li_2CO_3$, $LiNO_3$ and $Li_2O$.

9. The method according to claim 1, wherein the lithium precursor is added in an amount of 1 mol% to 40 mol% when a total amount of lithium comprised in the recovered positive electrode active material is 100 mol%.

10. The method according to claim 1, wherein, in the washing, a weight ratio of the annealed positive electrode active material to a washing solution is 1:0.5 to 1:4.

11. The method according to claim 1, wherein an amount of $Li_2CO_3$ remaining in the washed positive electrode active material is 0.17 % by weight or less.

12. The method according to claim 1, wherein the method of recycling a positive electrode active material comprises surface-coating the washed positive electrode active material to obtain a recyclable positive electrode active material.

13. The method according to claim 1, wherein, in the surface coating, one or more of a metal, an organic metal, and a carbon component is coated on the surface in a solid-phase or liquid-phase manner, and then heat-treated at 100 to 1200 °C.

14. A recycled positive electrode active material, manufactured by the method of recycling a positive electrode active material according to claims 1 to 13.

15. A recycled positive electrode active material, wherein the recycled positive electrode active material is one or more selected from the group consisting of lithium nickel oxide (LNO)-based positive electrode active materials, nickel·cobalt·manganese (NCM)-based positive electrode active materials, nickel·cobalt·aluminum(NCA)-based positive electrode active materials and nickel·cobalt·manganese·aluminum (NCMA)-based positive electrode active materials, and contains crystalline LiF, and
an amount of $Li_2CO_3$ remaining in recycled positive electrode active material is 0.17 % by weight or less.

16. The recycled positive electrode active material according to claim 15, wherein the recycled positive electrode active material comprises 60 mol% or more of Ni based on 100 mol% in a total of other metals excluding Li.

17. The recycled positive electrode active material according to claim 15, wherein the recycled positive electrode active material is surface-coated with a coating agent containing metal or carbon.

18. A secondary battery, comprising the recycled positive electrode active material according to one of claims 14 to 17.

【FIG. 1】

【FIG. 2】

【FIG. 3】

【FIG. 4】

```
S10 ──┌─────────────────────┐
      │   WASTE POSITIVE     │
      │     ELECTRODE        │
      └─────────────────────┘
                 │
                 ▼
S20 ──┌─────────────────────┐
      │        CRUSH         │
      └─────────────────────┘
                 │
                 ▼
S30 ──┌─────────────────────┐
      │     HEAT-TREAT       │
      └─────────────────────┘
                 │
                 ▼
S40 ──┌─────────────────────┐
      │    ANNEAL UNDER      │
      │  OXYGEN ATMOSPHERE   │
      └─────────────────────┘
                 │
                 ▼
S50 ──┌─────────────────────┐
      │        WASH          │
      └─────────────────────┘
                 │
                 ▼
S60 ──┌─────────────────────┐
      │    SURFACE-COAT      │
      └─────────────────────┘
                 │
                 ▼
       RECYCLED POSITIVE
   ELECTRODE ACTIVE MATERIAL
```

## INTERNATIONAL SEARCH REPORT

| | International application No. |
|---|---|
| | **PCT/KR2024/009959** |

### A. CLASSIFICATION OF SUBJECT MATTER

**H01M 10/54**(2006.01)i; **H01M 4/525**(2010.01)i; **H01M 4/36**(2006.01)i; **C01G 53/00**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 10/54(2006.01); C01G 53/00(2006.01); H01M 4/131(2010.01); H01M 4/505(2010.01); H01M 4/525(2010.01); H01M 50/446(2021.01); H01M 50/449(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 활물질(positive electrode active material), 재사용(reuse), 열처리(heat treatment), 어닐링(annealing), 세척(washing)

### C. DOCUMENTS CONSIDERED TO BE RELEVANT

| Category* | Citation of document, with indication, where appropriate, of the relevant passages | Relevant to claim No. |
|---|---|---|
| Y | KR 10-2021-0147597 A (LG ENERGY SOLUTION, LTD.) 07 December 2021 (2021-12-07) See paragraphs [0032]-[0059] and figure 2. | 1-14 |
| Y | KR 10-2023-0031075 A (LG ENERGY SOLUTION, LTD.) 07 March 2023 (2023-03-07) See paragraphs [0063], [0094] and [0101]-[0103] and claim 16. | 1-14 |
| Y | KR 10-2023-0039299 A (LG ENERGY SOLUTION, LTD.) 21 March 2023 (2023-03-21) See paragraph [0129]. | 10 |
| A | KR 10-2023-0019723 A (LG ENERGY SOLUTION, LTD.) 09 February 2023 (2023-02-09) See claims 1-2 and 5-13 and figure 2. | 1-14 |
| A | KR 10-2023-0038844 A (LG ENERGY SOLUTION, LTD.) 21 March 2023 (2023-03-21) See claims 1-2 and 9-13. | 1-14 |

☐ Further documents are listed in the continuation of Box C.    ☑ See patent family annex.

| | Special categories of cited documents: | | |
|---|---|---|---|
| * | | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 December 2024** | **04 December 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/009959**

| Box No. III | Observations where unity of invention is lacking (Continuation of item 3 of first sheet) |

This International Searching Authority found multiple inventions in this international application, as follows:

The invention of group 1: claims 1-14 pertain to a cathode active material regeneration method , and a regenerated cathode active material prepared using the regeneration method, the method comprising the steps of treating a waste cathode, which has a cathode active material layer formed on a current collector, with heat so as to collect the cathode active material, adding a lithium precursor to the collected cathode active material and annealing same, and washing the annealed cathode active material

The invention of group 2: claims 15-18 pertain to a regenerated cathode active material and a secondary battery comprising the regenerated cathode active material, which is at least one selected from the group consisting of a lithium nickel oxide-based cathode active material, a nickel cobalt manganese-based cathode active material, a nickel cobalt aluminum-based cathode active material and a nickel cobalt manganese aluminum-based cathode active material, contains LiF in a crystalline phase and has 0.17 wt% or less of the residual amount of $Li_2CO_3$

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☑ No required additional search fees were timely paid by the applicant. Consequently, this international search report is restricted to the invention first mentioned in the claims; it is covered by claims Nos.: **claims 1-14**

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

## INTERNATIONAL SEARCH REPORT
### Information on patent family members

| International application No. |
|---|
| **PCT/KR2024/009959** |

| Patent document cited in search report | | | Publication date (day/month/year) | Patent family member(s) | | | Publication date (day/month/year) |
|---|---|---|---|---|---|---|---|
| KR | 10-2021-0147597 | A | 07 December 2021 | CN | 114375520 | A | 19 April 2022 |
| | | | | EP | 4047716 | A1 | 24 August 2022 |
| | | | | EP | 4047716 | A4 | 14 June 2023 |
| | | | | JP | 2022-545205 | A | 26 October 2022 |
| | | | | JP | 7451683 | B2 | 18 March 2024 |
| | | | | US | 2022-0336879 | A1 | 20 October 2022 |
| | | | | WO | 2021-241818 | A1 | 02 December 2021 |
| KR | 10-2023-0031075 | A | 07 March 2023 | CN | 117063329 | A | 14 November 2023 |
| | | | | EP | 4358232 | A1 | 24 April 2024 |
| | | | | JP | 2024-515170 | A | 05 April 2024 |
| | | | | US | 2024-0356098 | A1 | 24 October 2024 |
| | | | | WO | 2023-027436 | A1 | 02 March 2023 |
| KR | 10-2023-0039299 | A | 21 March 2023 | CN | 116888807 | A | 13 October 2023 |
| | | | | EP | 4287354 | A1 | 06 December 2023 |
| | | | | JP | 2024-502893 | A | 23 January 2024 |
| | | | | US | 2024-0120566 | A1 | 11 April 2024 |
| | | | | WO | 2023-043071 | A1 | 23 March 2023 |
| KR | 10-2023-0019723 | A | 09 February 2023 | CN | 116802329 | A | 22 September 2023 |
| | | | | EP | 4287353 | A1 | 06 December 2023 |
| | | | | JP | 2024-502892 | A | 23 January 2024 |
| | | | | US | 2024-0106020 | A1 | 28 March 2024 |
| | | | | WO | 2023-014023 | A1 | 09 February 2023 |
| KR | 10-2023-0038844 | A | 21 March 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230094928

- KR 1020240087611